Europäisches Patentamt

European Patent Office

Office européen des brevets

(19)

(11) Publication number: **0 343 128**
**A2**

# EUROPEAN PATENT APPLICATION

(12)

(21) Application number: **89830222.9**

(22) Date of filing: **17.05.89**

(51) Int. Cl.⁴: **G 05 D 23/24**
**F 24 D 19/10**

(30) Priority: **17.05.88 IT 2061388**

(43) Date of publication of application:
**23.11.89 Bulletin 89/47**

(84) Designated Contracting States:
**AT CH DE ES FR GB GR LI NL SE**

(71) Applicant: **FERROLI INDUSTRIE RISCALDAMENTO S.p.A.**
**Box No. 79**
**I-37047 San Bonifacio (Verona) (IT)**

(72) Inventor: **Ferroli, Dante**
**Ferroli Industrie Riscaldamento S.p.A.**
**P.O.Box 79 37047 San Bonifacio(Verona) (IT)**

(74) Representative: **Cicogna, Franco**
**Ufficio Internazionale Brevetti Dott.Prof. Franco Cicogna**
**Via Visconti di Modrone, 14/A**
**I-20122 Milano (IT)**

(54) Heating system including an assembly for automatically adjusting the temperature of the heating water.

(57) The present invention relates to a heating system including an adjusting assembly for automatically adjusting the temperature of the heating water, including a boiler, burner and heat exchanger, associated with a water recirculating device and at least a radiator device arranged in the environment to be heated.

The main feature of the invention is that the system further comprises a thermostat which drives programmable means to control, in a given period of time, the increase of the temperature of the boiler water, there being moreover provided means for controlling the maximum temperature of the boiler water or fluid.

Fig. 1

## Description

## HEATING SYSTEM INCLUDING AN ASSEMBLY FOR AUTOMATICALLY ADJUSTING THE TEMPERATURE OF THE HEATING WATER

### BACKGROUND OF THE INVENTION

The present invention relates to a heating system including an adjusting assembly for automatically adjusting the temperature of the heating water.

As is known, the control of the burner of the boiler of a hetaing system is generally carried out by thermostatic means in order to provide energy savings and a comfortable environment.

More specifically, the boiler of the heating system is usually provided with a thermostat which is preset on a reference value indicated by the device builder, while the environment thermostat is usually set on a value which is specifically selected by the user.

With such an adjusting method, the temperature of the boiler water or fluid quickly increases up to a maximum value, which is in turn preset by the boiler thermostat, for the overall operation time set by the environment thermostat.

Thus, as it should be easily apparent, the power amount transmitted to the room will be greater than that which is actually required since, from the time in which the fluid carrying to the environment the heat of the boiler is brought to its maximum temperature to the time in which the environment thermostat is driven to switch off the boiler, a remarkable time period elapses, which is due to the thermal inertia associated with the heat transmission from the boiler fluid and encompassing environmental air.

During this period of time, in particular, the boiler will consume waste power and, moreover, an objectable step increase of the environment temperature occurs, since the temperature control is carried out between a value greater than the set value (because of the mentioned thermal inertia) and the lowermost value, that is the operating value of the environment thermostat.

In this connection, it is to be moreover pointed out that this power waste will increase as the set point of the environment thermostat is changed.

### SUMMARY OF THE INVENTION

Accordingly the invention sets out to overcome the above mentioned drawbacks, by providing a heating system including an adjusting assembly for automatical ly adjusting the temperature of the heating water which is suitable to gradually adjust the boiler water temperature so as to reduce to a minimum the power waste.

Within that aim, a main object of the present invention is to provide such a temperature adjusting assembly which is specifically designed to properly control the boiler temperature water variations as sensed by an environment thermostat so as to prevent the temperature of the environment air from suddenly varying.

Another object of the present invention is to provide a heating system which is very reliable in operation and which can be made starting from easily available elements and materials, and which, moreover, is very advantageous from a mere economic standpoint.

According to one aspect of the present invention, the above mentioned task and objects, as well as yet other objects, which will become more apparent hereinafter, are achieved by a heating system including an adjusting assembly for automatically adjusting the temperature of the heating water, comprising a boiler with burner and heat exchanger, associated with a water recirculating device to convey water to at least a radiator arranged in an environment to be heated, characterized in that said heating system further comprises an environment thermostat driving programmable means for controlling, in a given period of time, the increase of said boiler water, there being moreover provided control means for controlling the maximum temperature of said boiler.

### BRIEF DESCRIPTION OF THE DRAWINGS

Further characteristics and advantages of the invention will become more apparent from the following detailed description of a preferred embodiment thereof which is illustrated, by way of an indicative but not limitative example, in the figures of the accompanying drawings, where:

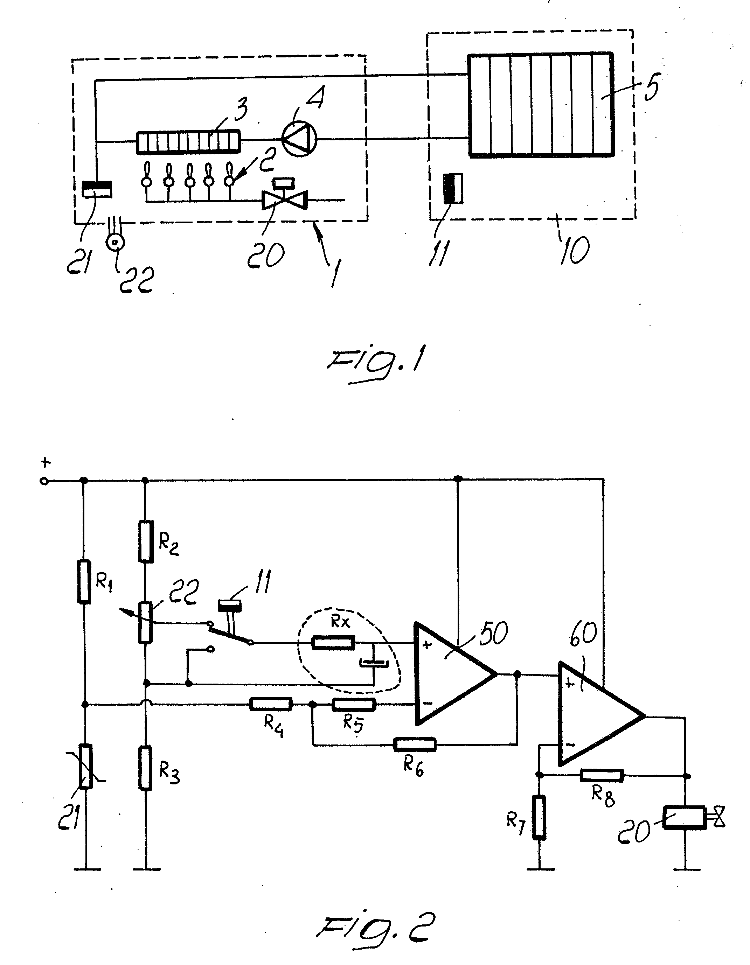

figure 1 is a schematic view illustrating the heating system according to the present invention;

figure 2 shows a possible embodiment of programmable means for controlling the increase of the temperature of a boiler fluid or water, included in the heating system according to the present invention;

figure 3 is a graph illustrating a possible evolvement of the boiler water temperature, in which the water temperature is represented on the vertical axis and the time is represented on the horizontal axis.

### DESCRIPTION OF THE PREFERRED EMBODIMENT

With reference to the figures of the accompanying drawings, the heating system including a temperature adjusting assembly for automatically adjusting the temperature of the heating water according to the present invention, comprises a boiler overally indicated at the reference number 1, which is provided with a burner 2 supplied with any suitable fuels.

More specifically, as it is operated, the burner 2 will provide heat energy to heat the water held in a heat exchanger 3 which is coupled, through a water circulating device 4, to a plurality of radiators overally indicated at the reference number 5 in the drawing.

In particular, the radiators 5 will be arranged in a room or environment 10 to be heated, in which an environment thermostat 11 is further provided.

The boiler is moreover provided with a fuel adjusting valve 20 to control the fuel supply to the burner : in this connection it should be pointed out that the fuel amount delivered to the burner can be controlled through the valve 20 either in an on/off manner or in a modulated or step manner.

As shown, the thermostat 11 controls or drives programmable means to constantly control, within a given period of time, the increase of the boiler water.

In a specifically designed embodiment, the thermostat 11 will control the fuel amount delivered to the burner through the valve 20; thus the delivered fuel amount will depend on the electric voltage supplied to the valve 20.

The boiler water temperature, in turn, is controlled through a probe 21, means being moreover provided for controlling the maximum temperature of the boiler water, which control means have been indicated at the reference number 22.

In this connection it should be pointed out that in conventional heating system the environment thermostat directly controls the fuel valve 20, while the sensors or adjusting thermostats respectively operate as boiler water temperature limiting and adjusting elements.

In the heating system according to the present invention, on the contrary, the thermostat or switch 11 drives the fuel valve 20 and the boiler water temperature is controlled in an indirect manner.

In fact, by operating the adjusting element 22 it will be possible to set the maximum value of the boiler water temperature, the actual temperature control being carried out by a programmable circuit which constitutes the mentioned programmable means and can be of the type which has been diagramatically shown in figure 2.

More specifically this programmable circuit comprises an amplifier 50 at the input side of which there is a resistor RX with a shunt capacitor CX, the environment thermostat 11 operating as a true switch in combination with the adjusting element 22, in series therewith there is provided a further resistor R2.

At the negative terminal of the amplifier 50 there are provided series coupled resistors R5 and R4 which extend from a resistor R1 series coupled to the probe 21 for controlling the boiler water temperature.

As shown, the output of the amplifier 50 is supplied to the positive input of an amplifier 60, there being provided a further resistor R6 arranged in parallel between the negative input of the amplifier 50 and its output.

As it should be apparent to those skilled in the art, with the disclosed circuit arrangement it will be possible to gradually control or adjust the increase time of the boiler delivery water, depending on the values of the resistor RX and capacitor CX.

In particular, as the temperature in the environment 10 reaches the set or desired value, the thermostat or switch 11 will operate and, through an auxiliary circuit, not shown in the drawings, will cause the fuel control valve 20 to close, because of the gradual decrease of the voltage applied to the positive input of the amplifier 50.

With the decreasing voltage, the fuel amount supplied to the burner will be gradually decreased, so as to achieve an equilibrium condition between the required temperature, which corresponds to the voltage at the positive input of the amplifier 50, and the actual temperature which is detected by the probe 21.

Thus, the valve 20, which is connected to the output of the amplifier 60, will be constantly controlled, so as to constantly control the increasing rate of the boiler water, thereby preventing the boiler and environment from overheating. Moreover, the set temperature variations, performed directly by the user on the adjusting element 22 and thermostat 11, do not cause the fuel flow rate to the burner to suddenly change.

According to a preferred embodiment, the boiler water temperature can be controlled to gradually increase up to 65% of its maximum value in a period of time from 1 to 25 minutes, by properly setting the adjusting thermostat.

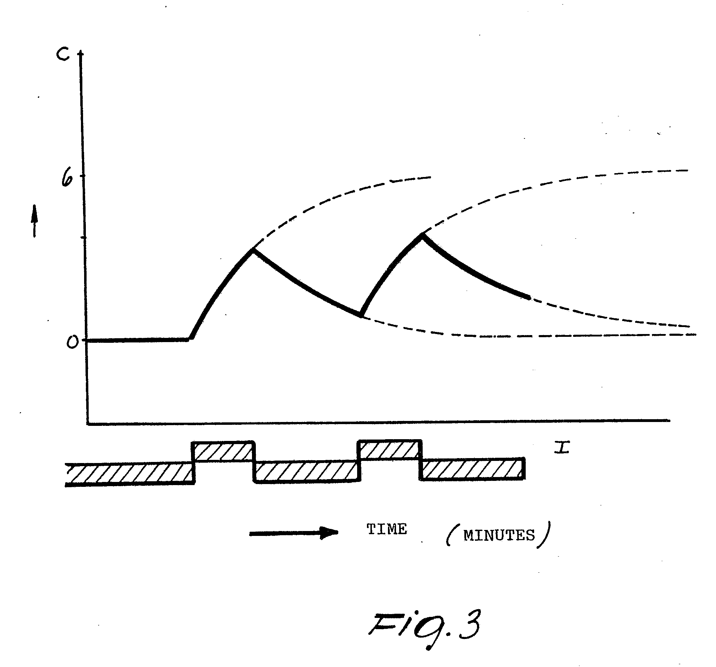

In particular, the temperature increase can be by steps, for example 50 for minute, or of low and linear speed, as schematically shown in figure 3.

In this connection it should be apparent that these temperature adjusting operations are directly performed on the burner, by switching on/off it or by modulating its flame, as disclosed, that is by changing the fuel flow rate from the adjusted minimum value to the adjusted maximum value thereof.

As the environment temperature reaches the environment thermostat set temperature value, the burner will be switched off.

Thus the subject system affords the possibility of selecting the set point of the boiler thermostat so that to cause the burner to operate under the control of the boiler thermostat which has a lower set point than that before the switching off of the burner; accordingly this set point will be gradually upward displaced up to reach its maximum point or up to a new operation of the environment thermostat.

From the above disclosure it should be apparent that the invention fully achieves the intended aim and objects.

While the invention has been disclosed and illustrated with reference to a preferred embodiment thereof, it should be apparent that the disclosed embodiment is susceptible to several modofications and variations within its scope and spirit.

## Claims

1- A heating system including a temperature adjusting assembly for automatically adjusting the temperature of the heating water, comprising a boiler with burner and heat exchanger, associated with a water recirculating device for conveying water to at least a radiator, arranged in the environment to be heated, characterized in that said heating system further comprises an environment thermostat driving programmable means for controlling, in a given period of time, the increase of the temperature of the boiler water, there being moreover provided means for controlling the maximum temperature of said boiler.

2- A heating system according to Claim 1, characterized in that said environment thermostat is so designed and arranged as to allow for the temperature of said boiler water to vary either linearly or by steps.

3- A heating system according to Claims 1 and 2, characterized in that the increase variations of the temperature of said boiler water is carried out by changing the flow rate of the fuel to said burner.

4- A heating system, according to one or more of the preceding claims, characterized in that said programmable means comprise a first differential amplifier to the not reversing input of which are coupled a resistor and capacitor operatively electrically coupled to said environment thermostat.

5- A heating system, according to one or more of the preceding claims, characterized in that said amplifier has its output coupled to the not reversing input of a further differential amplifier driving a fuel control valve suitable to control the fuel delivery to said burner, the voltage applied to said fuel control valve being effective to be gradually varied.

6- A heating system according to one or more of the preceding claims, characterized in that said heating system further comprises a probe for detecting the temperature of said boiler water.

Fig.1

Fig.2

Fig.3